# EUROPÄISCHE PATENTSCHRIFT

(11) **EP 1 229 104 B1**
(45) Veröffentlichungstag und Bekanntmachung des Hinweises auf die Patenterteilung: **15.09.2004**
(21) Anmeldenummer: 02001575.6
(22) Anmeldetag: 23.01.2002
(51) Int. Cl.: C11D 1/722, C11D 1/825, C11D 1/83

(54) **Spül- und Reinigungsmittel**
Rinsing and cleaning agent
Produit de rinçage et de nettoyage

(30) Priorität: 01.02.2001 DE 10104368
(43) Veröffentlichungstag der Anmeldung: 07.08.2002
(73) Patentinhaber: Cognis Deutschland GmbH & Co. KG, 40589 Düsseldorf (DE)
(72) Erfinder: Weuthen, Manfred, Dr., 40764 Langenfeld (DE); Raths, Hans-Christian, Dr., 40789 Monheim (DE); Elsner, Michael, 42579 Heiligenhaus (DE)

(56) Entgegenhaltungen:
- EP-A- 0 299 360
- EP-A- 1 167 499
- WO-A-96/12001
- US-A- 4 836 951

## Beschreibung

### Gebiet der Erfindung

Die Erfindung betrifft Spül- und Reinigungsmittel, enthaltend Hydroxymischether, gegebenenfalls weitere nichtionische Tenside und anionische Tenside, sowie die Verwendung derartiger Mischungen in Spül- und Reinigungsmittel.

### Stand der Technik

Mittel für das Spülen und Reinigen harter, nichttextiler Oberflächen, die im Haushalt und Gewerbesektor vorkommen sollen meist bei Anwendung ein geringfügiges Schaumvolumen entwickeln, das sich innerhalb von wenigen Minuten signifikant weiter verringert. Mittel dieser Art sind seit langem bekannt und im Markt etabliert. Es handelt sich dabei im wesentlichen um wäßrige Tensidlösungen unterschiedlicher Art mit oder ohne Zusatz von Buildern, Lösungsvermittlern (Hydrotropen) oder Lösungsmitteln. Zum Nachweis der Wirksamkeit bei Beginn der Reinigungsarbeit wird vom Verbraucher zwar ein gewisses Schäumen der Anwendungslösung gewünscht, der Schaum soll jedoch rasch zusammenfallen, damit einmal gereinigte Flächen nicht nachgewischt werden müssen. Zu diesem Zweck werden Mittel der genannten Art üblicherweise mit schwach schäumenden nichtionischen Tensiden versetzt.
Besonders an maschinell gespültes Geschirr werden heute höhere Anforderungen gestellt als an manuell gespültes Geschirr. So wird auch ein von Speiseresten völlig gereinigtes Geschirr dann als nicht einwandfrei bewertet, wenn es nach dem maschinellen Geschirrspülen noch weißliche, auf Wasserhärte oder anderen mineralischen Salzen beruhende Flecken aufweist, die mangels Netzmittel aus eingetrockneten Wassertropfen stammen.
Um glanzklares und fleckenloses Geschirr zu erhalten, setzt man daher Klarspüler ein. Der Zusatz von flüssigem oder festem Klarspüler, der separat zugegeben werden kann, oder bereits in gebrauchsfertiger Darreichungsform mit dem Reinigungsmittel und/oder Regeneriersalz zusammen ("2 in 1", "3 in 1", z.B. in Form von Tabs und Pulvern) vorliegt, sorgt dafür, dass das Wasser möglichst vollständig vom Spülgut abläuft, sodass die unterschiedlichen Oberflächen am Ende des Spülprogramms rückstandsfrei und glänzend sind.
Marktübliche Klarspülmittel stellen Gemische z.B. aus nichtionischen Tensiden, Lösungsvermittlern, organischen Säuren und Lösungsmitteln, Wasser sowie ggf. Konservierungsmittel und Duftstoffe dar.

Die Aufgabe der Tenside in diesen Mitteln besteht darin, die Grenzflächenspannung des Wassers so zu beeinflussen, dass es in einem möglichst dünnen, zusammenhängenden Film vom Spülgut ablaufen kann, so dass beim anschließenden Trocknungsvorgang keine Wassertropfen, Streifen oder Filme zurückbleiben (sogenannte Netzwirkung).
Deswegen müssen Tenside in Klarspülern auch den durch Speisereste auftretenden Schaum in der Geschirrspülmaschine dämpfen. Da die Klarspüler meist Säuren für eine Verbesserung des Klartrockeneffekts enthalten, müssen die eingesetzten Tenside zusätzlich relativ hydrolyseunempfindlich gegenüber Säuren sein. Klarspüler werden sowohl im Haushalt als auch im gewerblichen Bereichen eingesetzt. In Haushaltsgeschirrspülern wird der Klarspüler meist nach dem Vorspül- und Reinigungsgang bei knapp 40°C-65°C zudosiert. Die gewerblichen Geschirrspülmaschinen arbeiten mit nur einer Reinigungsflotte, die lediglich durch Zugabe der Klarspüllösung aus dem vorhergehenden Spülvorgang erneuert wird. Es findet also während des gesamten Spülprogrammes kein vollständiger Wasseraustausch statt. Daher muß der Klarspüler auch schaumdämpfend wirken, temperaturstabil sein bei einem starken Temperaturgefälle von 85-35°C und außerdem ausreichend stabil gegen Alkali und Aktivchlor sein.

In der deutschen Offenlegungsschrift **DE 19738866** werden Tensidmischungen aus Hydroxymischethern und nichtionischen Tensiden, wie Fettalkoholpolyethylenglycol/polypropylenglycolether, gegebenenfalls endgruppenverschlossen, beschrieben, die ein sehr gutes Schaumverhalten aufweisen und in Klarspülmitteln hervorragende Klarspüleffekte zeigen.
Aus der deutschen Offenlegungsschrift **DT 2432757** ist bekannt, das Hydroxymischether als Schaumdämpfungsmittel in Wasch-, Spül- und Reinigungsmittel eingesetzt werden.

Dokument EP - A - 1 167 499 (Stand der Technik unter Artikel 54 (3) EPÜ) offenbart Hydroxymischether enthaltende Flüssigwaschmittel.

Dokument EP-A-0 299 360 zeigt ein Verfahren zur Herstellung von Hydroxymischethern sowie deren Verwendung als schaumdrückende Zusätze in schaumarmen Reinigungsmitteln.

Dokument US-A-4 836 951 offenbart randomisierte Polyetherverbindungen, die Ethylenoxid- und Propylenoxid- oder Butylenoxideinheiten enthalten, sowie deren Verwendung als Schaumregulierungsmittel.

**Aufgabe** der vorliegenden Erfindung war es, Spül- und Reinigungsmittel zu entwickeln, die gleichzeitig ein gutes Schaum- und Reinigungsverhalten, insbesondere ein sehr gutes Ablaufverhalten an Kunststoffoberflächen und eine hohe Materialverträglichkeit der zu reinigenden Oberflächen zeigen. Außerdem sollten Hydroxymischether bereitgestellt werden, die sich besonders vorteilhaft in feste Formulierungen einarbeiten lassen.
Die **Aufgabe wurde gelöst,** indem Hydroxymischether entwickelt wurden, die neben ihrer schaumdämpfenden Wirkung auch eine hohe Verträglichkeit gegenüber Kunststoff zeigen. Überraschenderweise bestechen die erfindungsgemäßen Hydroxymischether vor allem durch ihr farblose, klares Aussehen, das eine Einarbeitung in eine Vielzahl von Spül- und Reinigungsmitteln, ohne aufwendigen Bleichvorgang erst möglich macht.

### Beschreibung der Erfindung

Gegenstand der Erfindung ist die Verwendung von Hydroxymischether (HME) der Formel (I)

R¹O[CH₂CHR⁴O]ₓ[CH₂CHR³O]_{y}CH₂CH(OH)R² (I)

in der R¹ für Alkyl- und/oder Alkenylrest mit 4 bis 22 Kohlenstoffatomen
R² für einen Alkyl- und/oder Alkenylrest mit 2 bis 22 Kohlenstoffatomen
R⁴ für ein Wasserstoff atom und R³ für einen Methylrest, oder
R³ für ein Wasserstoff atom und R⁴ für einen Methylrest,
x für 1 bis 40 und
y für 1 bis 40 steht, wobei
die Alkyleneinheiten [CH₂CHR⁴O] und [CH₂CHR³O] im Verhältnis 40:1 bis 40:5 randomisiert, d.h. in Form einer statistischen, zufälligen Verteilung vorliegen, in maschinellen Geschirrreiniger oder klarspülern zum Spülen und Reinigen von harten Oberflächen.

Solche Hydroxymischether die Alkyleneinheiten [CH₂CHR⁴O] und [CH₂CHR³O], enthalten nämlich Ethylenoxid und Propylenoxid, "**randomized**", d.h. durch das vorherige Vermischen der Alkoxylierungsreagenzien und Reaktion mit dem Alkohol und anschließender Epoxidverschluß werden Hydroxymischether erhalten, die über eine statistische, zufällige Verteilung der Alkyleneinheiten verfügen. Die Hydroxymischether enthalten die Ethylenoxid- und Propylenoxid-Einheiten randomized im Verhältnis 40:1 bis 40:5.

### Hydroxymischether

Hydroxymischether sind literaturbekannt und werden beispielsweise in der deutschen Anmeldung **DE 19738866** beschrieben.
Sie werden hergestellt durch Umsetzung von 1,2-Epoxyalkanen (R²CHOCH₂), wobei R² für einen Alkyl- und/oder Alkenylrest mit 2 bis 22, insbesondere 6 bis 16 Kohlenstoffatomen steht, mit alkoxylierten Alkoholen. Bevorzugt im Sinne der Erfindung werden solche Hydroxymischether, die sich von Alkoxylaten von einwertigen Alkoholen der Formel R¹-OH mit 4 bis 18 Kohlenstoffatomen ableiten, wobei R¹ für einen aliphatischen, gesättigten, geradkettigen oder verzweigten Alkylrest, insbesondere mit 6 bis 16 Kohlenstoffatomen, steht. Beispiele für geeignete geradkettige Alkohole sind Butanol-1, Capron-, Önanth-, Capryl-, Pelargon-, Caprinalkohol, Undecanol-1, Laurylalkohol, Tridecanol-1, Myristylalkohol, Pentadecanol-1, Palmitylakohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestern auf Basis von Fetten und Ölen anfallen. Beispiele für verzweigte Alkohole sind sogenannte Oxoalkohole, die meist 2 bis 4 Methylgruppen als Verzweigungen tragen und nach dem Oxoprozeß hergestellt werden und sogenannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole werden in Form ihrer Alkoxylate eingesetzt, die durch Umsetzung der Alkohole in **beliebiger Reihenfolge (randomized)** mit Ethylenoxid und Propylenoxid auf bekannte Weise hergestellt werden.
Dadurch resultieren Hydroxymischether mit EO und PO Einheiten in beliebiger Reihenfolge. Bevorzugt sind sowohl Alkoxylate, die durch Umsetzung von Alkohol mit Mischungen aus 1 bis 10 Mol Propylenoxid (R⁴=Methyl, x=1-10 oder R³=Methyl, y=1-10) und 10 bis 40 Mol Ethylenoxid (R³=Wasserstoff, y=10-40 oder R⁴=Wasserstoff, x=10-40) entstehen.

**Bevorzugt im Sinne der Erfindung** werden solche Hydroxymischether, die sich von Alkoxylaten von einwertigen Alkoholen der Formel R¹-OH mit 4 bis 18 Kohlenstoffatomen, vorzugsweise 6 bis 16 und **insbesondere** 8 bis 10 Kohlenstoffatomen ableiten, wobei R¹ für einen linearen oder verzweigten Alkyl- und/oder Alkenylrest steht.

**Ganz besonders bevorzugt** sind Hydroxymischether der Formel (I), wobei R1 für einen Alkylrest mit 8 bis 10 Kohlenstoffatomen, insbesondere auf Basis eines nativen Fettalkohols, R2 für einen Alkylrest mit 10 Kohlenstoffatome, insbesondere für einen linearen Alkylrest steht.

### Alkyl- und/oder Alkenyloligoglykoside

In einer weiteren Ausführungsform enthalten die erfindungsgemäßen Spül- und Reinigungsmittel Alkyl- und/oder Alkenyloligoglykoside der Formel (II)

**R**^{**5**}**O-[G]**_{**p**} (II)

wobei R⁵ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

Sie können nach den einschlägigen Verfahren der präparativen organischen Chemie erhalten werden. Stellvertretend für das umfangreiche Schrifttum sei hier auf die Übersichtsarbeit von Biermann et al. in **Starch/Stärke 45, 281 (1993),** B. Salka in **Cosm.Toil. 108, 89 (1993)** sowie J. Kahre et al. in **SÖFW-Journal Heft 8, 598 (1995)** verwiesen.
Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside.
Der **Alkylrest** R⁵ kann sich von primären **gesättigten Alkoholen** ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, Cetylalkohol, Palmitylakohol, Heptadecanol-1, Stearylalkohol, Isostearylalkohol, Nonadecanol-1, Arachidylalkohol, Heneicosanol-1, und Behenylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden.
Der **Alkenylrest** R⁵ kann sich von primären **ungesättigten Alkoholen** ableiten. Typische Beispiele **ungesättigter Alkohole** sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische, die wie oben beschrieben erhalten werden können.

**Bevorzugt** werden Alkyl- bzw. Alkenylrest R⁵, die sich von primären Alkoholen mit 6 bis 16 Kohlenstoffatomen ableiten.
**Insbesondere geeignet** sind Alkyloligoglucoside der Kettenlänge C₈-C₁₀, die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole.
Der Alkyl- bzw. Alkenylrest R⁵ kann sich ferner auch von primären Alkoholen mit 12 bis 14 Kohlenstoffatomen ableiten.

Die Indexzahl p in der allgemeinen Formel **(II)** gibt den Oligomerisierungsgrad (DP), d.h. die Verteilung von Mono- und Oligoglykosiden an und steht für eine Zahl zwischen 1 und 10. Während p in einer gegebenen Verbindung stets ganzzahlig sein muß und hier **insbesondere** die Werte p = 1 bis 3 annehmen kann, ist der Wert p für ein bestimmtes Alkyloligoglykosid eine analytisch ermittelte rechnerische Größe, die meistens eine gebrochene Zahl darstellt.
**Vorzugsweise** werden Alkyl- und/oder Alkenyloligoglykoside mit einem mittleren Oligomerisierungsgrad p von 1,1 bis 2,0 eingesetzt. Aus anwendungstechnischer Sicht sind solche Alkyl- und/oder Alkenyloligoglykoside **bevorzugt,** deren Oligomerisierungsgrad kleiner als 2,0 ist und insbesondere zwischen 1,2 und 1,7 liegt.

Bevorzugt werden Alkyl- und/oder Alkenyloligoglycoside der Formel (II) eingesetzt, wobei p für Zahlen von 1 bis 3 und R5 für einen Alkylrest mit 6 bis 16 Kohlenstoffatomen steht.

**In einer bevorzugten Ausführungsform** enthalten die erfindungsgemäßen Spül- und Reinigungsmittel 0,01 bis 25 Gew.%, vorzugsweise 0,025 bis 20 Gew.% und insbesondere 0,1 bis 15 Gew.% Hydroxymischether der Formel (I) berechnet als Aktivsubstanz, bezogen auf die Mittel.
**Aktivsubstanz** definiert sich als die Masse an Tensiden (gerechnet als Reinstoff zu 100%), die in dem Spül- und Reinigungsmittel enthalten sind.

**In einer weiteren Ausführungsform** enthalten die erfindungsgemäßen Spül- und Reinigungsmittel 0,01 bis 30 Gew.%, vorzugsweise 0,1 bis 20 Gew.% und insbesondere 0,2 bis 15 Gew.% Alkyl- und/oder Alkenyloligoglykoside der Formel (II) berechnet als Aktivsubstanz, bezogen auf die Mittel.

### Nichtionische Tenside

**Die erfindugsgemäßen Mittel können** weitere nichtionische Tenside enthalten. Typische Beispiele für **nichtionische Tenside** sind Alkoxylate von Alkanolen, endgruppenverschlossene Alkoxylate von Alkanolen ohne freie OH-Gruppen , alkoxylierte Fettsäureniedrigalkylester, Aminoxide, Alkylphenolpolyglycolether, Fettsäurepolyglycolester, Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester, und Polysorbate. Sofem die nichtionischen Tenside Polyglycoletherketten enthalten, können diese eine konventionelle, vorzugsweise jedoch eine eingeengte Homologenverteilung aufweisen.

**Bevorzugt** sind die weiteren nichtionische Tenside ausgewählt aus der Gruppe, die gebildet wird von **Alkoxylaten von Alkanolen,** insbesondere Fettalkoholpolyethylenglykol/polypropylenglykolether (FAEO/PO) der Formel (III) bzw. Fettalkoholpolypropylenglykol/polyethylenglykolether (FAPO/EO) der Formel (IV), **end** **gruppenverschlossene Alkoxylate von Alkanole,** insbesondere endgruppenverschlossene Fettalkoholpolyethylenglykol/polypropylenglykolether bzw. endgruppenverschlossene Fettalkoholpolypropylenglykol/polyethylenglykolether, und Fettsäureniedrigalkylester und Aminoxiden.

### Fettalkoholpolyethylenglykol/polypropylenglykolether

In einer bevorzugten Ausführungsform werden Fettalkoholpoly**ethylenglykol**/poly**propylenglykol**ether der Formel (III), die gegebenenfalls endgruppenverschlossen sind,

R⁶O(CH₂CH₂O)ₙ[CH₂(CH₃)CHO]ₘR⁷ **(III)**

eingesetzt, in der R⁶ für einen Alkyl- und/oder Alkenylrest mit 8 bis 22 C-Atomen, R⁷ für H oder einen Alkylrest mit 1 bis 8 C-Atomen, n für eine Zahl von 1 bis 40, **vorzugsweise** 1 bis 30, **insbesondere** 1 bis 15, und m für 0 oder eine Zahl von 1 bis 10 steht.

### Fettalkoholpolypropylenglykol/polyethylenglykolether

Ebenso geeignet sind Fettalkohol**polypropylenglykol**/poly**ethylenglykolether** der Formel (IV), die gegebenenfalls endgruppenverschlossen sind,

R⁸O[CH₂(CH₃)CHO]_{q}(CH₂CH₂O)ᵣR⁹ **(IV)**

in der R⁸ für einen Alkyl- und/oder Alkenylrest mit 8 bis 22 C-Atomen, R⁹ für H oder einen Alkylrest mit 1 bis 8 C-Atomen, q für eine Zahl von 1 bis 5 und r für eine Zahl von 0 bis 15 steht.

Einer **bevorzugten Ausführungsform** entsprechend enthalten die erfindungsgemäßen Mittel Fettalkoholpolyethylenglykol/polypropylenglykolether der Formel (III), in der R⁶ für einen aliphatischen, gesättigten, geradkettigen oder verzweigten Alkylrest mit 8 bis 16 C-Atomen, n für eine Zahl von 1 bis 10, und m für 0 und R⁷ für Wasserstoff steht. Es handelt sich hierbei um Anlagerungsprodukte von 1 bis 10 Mol Ethylenoxid an monofunktionelle Alkohole. Als Alkohole sind die oben beschriebenen Alkohole wie Fettalkohole, Oxoalkohole und Guerbetalkohole geeignet.
Auch geeignet sind von solchen Alkoholethoxylaten solche, die eine eingeengte Homologenverteilung aufweisen.

**Weitere geeignete** Vertreter von nichtendgruppenverschlossenen Vertretern sind solche der Formel (III), in der R⁶ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁷ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (III) sind mit einer Alkylgruppe mit 1 bis 8 C-Atomen verschlossen (R⁷). Häufig werden derartige Verbindungen in der Literatur auch als Mischether bezeichnet. Geeignete Vertreter sind Methylgruppenverschlossene Verbindungen der Formel (III), in denen R⁶ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁷ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von Alkylgruppenverschlossenen Verbindungen sind solche der Formel (III), in denen R⁶ für einen aliphatischen, gesättigten, geradkettigen oder verzweigten Alkylrest mit 8 bis 16 C-Atomen, n für eine Zahl von 5 bis 15, m für 0 und R⁷ für eine Alkylgruppe mit 4 bis 8 C-Atomen steht. Bevorzugt wird der Endgruppenverschluß mit einer geradkettigen oder verzweigten **Butylgruppe** durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (III) oder in Mischung mit ihnen können gegebenenfalls endgruppenverschlossene Fettalkoholpolypropylenglykol/polyethylenglykolether der Formel (IV) enthalten sein. Derartige Verbindungen werden beispielsweise in der deutschen Offenlegungsschrift DE-A1- 43 23 252 beschrieben. Besonders bevorzugte Vertreter der Verbindungen der Formel (IV) sind solche, in denen R⁸ für einen aliphatischen, gesättigten, geradkettigen oder verzweigten Alkylrest mit 8 bis 16 C-Atomen, q für eine Zahl von 1 bis 5, r für eine Zahl von 1 bis 6 und R⁹ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Hydroxymischethern als geeignet beschrieben worden sind.

### Alkoxylierte Fettsäureniedrigalkylester

Als **alkoxylierte Fettsäureniedrigalkylester** kommen Tenside der Formel **(V)** in Betracht,

**R**^{**10**}**CO-(OCH**_{**2**}**CHR**^{**11**}**)**_{**w**}**OR**^{**12**} **(V)**

in der R¹⁰CO für einen linearen oder verzweigten, gesättigten und/oder ungesättigten Acylrest mit 6 bis 22 Kohlenstoffatomen, R¹¹ für Wasserstoff oder Methyl, R¹² für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkylenoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestern.

### Aminoxide

Als **Aminoxide** können Verbindungen der Formel **(VI)** und/oder eingesetzt werden.

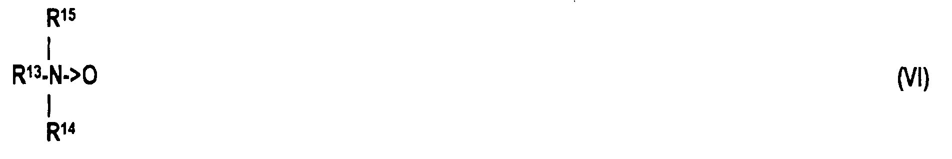

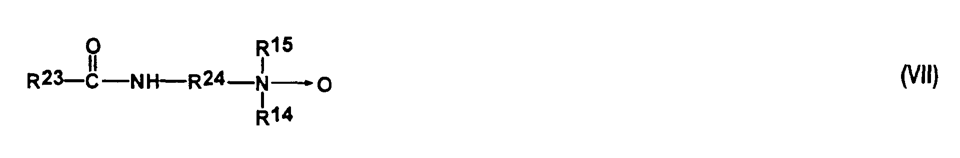

Bei der Herstellung der Aminoxide der Formel **(VI)** geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel **(VI),** steht R¹³ für einen linearen oder verzweigten Alkylrest mit 6 bis 22, vorzugsweise 12 bis 18 Kohlenstoffatomen, sowie R¹⁴ und R¹⁵ unabhängig voneinander für R¹³ oder einen gegebenenfalls hydroxysubstituierten Alkylrest mit 1 bis 4 Kohlenstoffatomen. Vorzugsweise werden Aminoxide der Formel **(VI)** eingesetzt, in der R¹³ und R¹⁴ für C_{12/14}- bzw. C_{12/18}-Kokosalkylreste stehen und R¹⁵ einen Methyl- oder einen Hydroxyethylrest bedeutet. Ebenfalls bevorzugt sind Aminoxide der Formel **(VI),** in denen R¹³ für einen C_{12/14}- bzw. C_{12/18}- Kokosalkylrest steht und R¹⁴ und R¹⁵ die Bedeutung eines Methyl- oder Hydroxyethylrestes haben.
Weitere geeignete Aminoxide sind **Alkylamido**-aminoxide der Formel **(VII),** wobei der Alkylamido-Rest R²³CONH durch die Reaktion von linearen oder verzweigten Carbonsäuren, vorzugsweise mit 6 bis 22, bevorzugt mit 12 bis 18 Kohlenstoffatomen, insbesondere aus C_{12/14}- bzw. C_{12/18}- Fettsäuren mit Aminen entsteht. Dabei stellt R²⁴ eine lineare oder verzweigte Alkylengruppe dar mit 2 bis 6, vorzugsweise 2 bis 4 Kohlenstoffatomen und R¹⁴ und R¹⁵ haben die in Formel **(VI)** angegebene Bedeutung.

Die weiteren nichtionische Tenside können in den erfindungsgemäßen Mitteln in Mengen von 0,1 bis 15 Gew.%, vorzugsweise 0,5 bis 10 Gew.%, insbesondere 1 bis 8 Gew.% enthalten sein, berechnet als Aktivsubstanz, bezogen auf die Mittel.

Gemäß der vorliegenden Erfindung können die Spül- und Reinigungsmittel **anionische Tenside** enthalten.

### Anionische Tenside

Typische Beispiele **für anionische Tenside** sind Seifen, **Alkylbenzolsulfonate,** sekundäre Alkansulfonate, Olefinsulfonate, Alkylethersulfonate, Glycerinethersulfonate, α-Methylestersulfonate, Sulfofettsäuren, **Alkyl - und/oder Alkenylsulfate, Alkylethersulfate,** Glycerinethersulfate, Hydroxymischethersulfate, **Monoglycerid(ether)sulfate,** Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

**Vorzugsweise** sind die **anionischen Tenside** ausgewählt aus der Gruppe, die gebildet wird von Alkyl- und/oder Alkenylsulfate, Alkylethersulfate, Alkylbenzolsulfonate, Monoglycerid(ether)sulfate und Alkansulfonate, insbesondere Fettalkoholsulfate, Fettalkoholethersulfate, sekundäre Alkansulfonate und lineare Alkylbenzolsulfonate.

### Alkyl- und/oder Alkenylsulfate

Unter Alkyl- und/oder Alkenylsulfaten, die auch häufig als Fettalkoholsulfate bezeichnet werden, sind die Sulfatierungsprodukte primärer Alkohole zu verstehen, die der Formel **(VIII)** folgen,

**R**^{**16**}**O-SO**_{**3**}**X (VIII)**

in der R¹⁶ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht.
Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelenschen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

### Alkylethersulfate

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Im Sinne der Erfindung kommen Ethersulfate in Betracht, die der Formel **(IX)** folgen,

**R**^{**17**}**O-(CH**_{**2**}**CH**_{**2**}**O)**_{**a**}**SO**_{**3**}**X (IX)**

in der R¹⁷ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

### Alkylbenzolsulfonate

Alkylbenzolsulfonate folgen vorzugsweise der Formel **(X)**,

**R**^{**18**}**-Ph-SO**_{**3**}**X (X)**

in der R¹⁸ für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

### Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. **EP 0561825 B1, EP 0561999 B1** (Henkel)]. Die neutralisierten Stoffe können - falls gewünscht - einer Ultrafiltration unterworfen werden, um den Elektrolytgehalt auf ein gewünschtes Maß zu vermindern [**DE 4204700 A1** (Henkel)]. Übersichten zur Chemie der Monoglyceridsulfate sind beispielsweise von A. K. Biswas et al. in **J.Am.Oil.Chem.Soc. 37, 171 (1960)** und F. U. Ahmed **J.Am.Oil.Chem.Soc. 67, 8 (1990)** erschienen. Die im Sinne der Erfindung einzusetzenden **Monoglycerid-(ether)sulfate** folgen der Formel **(XI),** 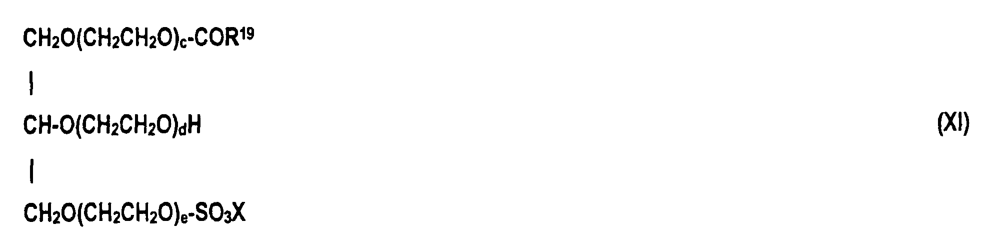 in der R¹⁹CO für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel **(XI)** eingesetzt, in der R¹⁹CO für einen linearen Acylrest mit 8 bis 18 Kohlenstoffatomen steht.

### Alkansulfonate

Unter Alkansulfonate versteht man Verbindungen der Formel **(XII).**

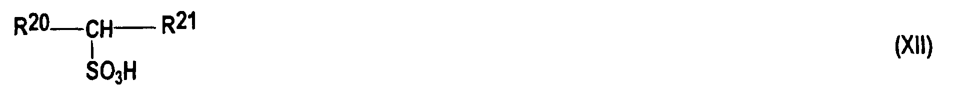

R²⁰ und R²¹ stehen für Alkylreste, wobei R²⁰ und R²¹ zusammen nicht mehr als 50 Kohlenstoffatome haben sollen.

**Zweckmäßigerweise** können die Spül- und Reinigungsmittel 0,1 bis 20 Gew.%, vorzugsweise 0,25 bis 15 Gew.%, insbesondere 0,4 bis 10 Gew.% **anionische Tenside** enthalten, berechnet als Aktivsubstanz, bezogen auf die Mittel. Den zu 100 Gew.% fehlenden Rest der Spül- und Reinigungsmittel können Hilfsstoffe sowie Wasser darstellen.

Die erfindungsgemäßen Mittel können als **Hilfsstoffe** beispielsweise **Lösungsvermittler** wie Cumolsulfonat, Ethanol, Isopropylalkohol, Ethylenglycol, Propylenglycol, Butylglycol, Diethylenglycol, Propylenglycolmonobutylether, Polyethylen- bzw. polypropylenglycolether mit Molmassen von 600 bis 1 500 000, vorzugsweise mit einer Molmasse von 400 000 bis 800 000, oder insbesondere Butyldiglycol enthalten. Weiterhin können Abrasivstoffe, wie Quarz- bzw. Holzmehl oder Polyethylenreibkörper enthalten sein.
In vielen Fällen ist eine zusätzliche bakterizide Wirkung erwünscht, weswegen die Mittel kationische Tenside oder Biozide, beispielsweise Glucoprotamin, enthalten können.
Geeignete Builder sind Zeolithe, Schichtsilicate, Phosphate sowie Ethylendiamintetraessigsäure, Nitrilotriessigsäure, Citronensäure und deren Salz, sowie anorganische Phosphonsäuren.
Unter den als Peroxy**-Bleichmittel** dienenden Verbindungen haben das Natriumperborat-Tetrahydrat und das Natriumperborat-Monohydrat eine besondere Bedeutung. Weitere Bleichmittel sind beispielsweise Peroxycarbonat, Citratperhydrate sowie H₂O₂-liefernde persaure Salze der Persäuren wie Perbenzoate, Peroxyphthalate oder Diperoxydodecandisäure. Sie werden üblicherweise in Mengen von 0,1 bis 40 Gew.-% eingesetzt. Bevorzugt ist der Einsatz von Natriumperborat-Monohydrat in Mengen von 10 bis 20 Gew.-% und insbesondere von 10 bis 15 Gew.-%.

Als **Enzyme** kommen solche aus der Klasse der Proteasen, Lipase, Amylasen, Cellulasen bzw. deren Gemische in Frage. Besonders gut geeignet sind aus Bakterienstämmen oder Pilzen, wie Bacillus sub-tilis, Bacillus lichenformis und Strptomyces griseus gewonnene enzymatische Wirkstoffe. Vorzugsweise werden Proteasen vom Subtilisin-Typ und insbesondere Proteasen, die aus Bacillus lentes gewonnen werden, eingesetzt. Ihr Anteil kann etwa 0,1 bis 6, vorzugsweise 0,2 bis 2 Gew.-% betragen. Die Enzyme können an Trägerstoffen adsorbiert oder in Hüllsubstanzen eingebettet sein, um sie gegen vorzeitige Zersetzung zu schützen.

Zusätzlich zu mono- und polyfunktionellen Alkoholen und Phosphonaten können die Mittel weitere **Enzymstabilisatoren** enthalten. Beispielsweise können 0,5 bis 1 Gew.-% Natriumformiat eingesetzt werden. Möglich ist auch der Einsatz von Proteasen, die mit löslichen Calciumsalzen und einem Cal-ciumgehalt von vorzugsweise etwa 1,2 Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboratenwie den Salzen der Orthoborsäure (H₃BO₃), der Metaborsäure (HBO₂) und der Pyroborsäure (Tetraborsäure H₂B₄O₇).

Beim Einsatz im maschinellen Waschverfahren kann es von Vorteil sein, den Mitteln übliche **Schauminhibitoren** zuzusetzen. Geeignete Schauminhibitoren enthalten beispielsweise bekannte Organo-olysiloxane und/oder Paraffine oder Wachse. Weiterhin enthalten sein können **Schaumregulatoren,** wie beispielsweise Seife, Fettsäuren, insbesondere Kokosfettsäure und Palmkernfettsäure.

Als Verdickungsmittel können beispielsweise gehärtetes Rizinusöl, Salze von langkettigen Fettsäu-ren, die vorzugsweise in Mengen von 0 bis 5 Gew.-% und insbesondere in Mengen von 0,5 bis 2 Gew.-%, beispielsweise Natrium-, Kalium-, Aluminium-, Magnesium- und Titan-Stearate oder die Natrium und/oder Kaliumsalze der Behensäure, sowie weitere polymere Verbindungen eingesetzt werden. Zu den letzten gehören bevorzugt Polyvinylpyrrolidon, Urethane und die Salze polymerer Polycarboxylate, beispielsweisehomopolymerer oder copolymerer Polyacrylate, Polymethacrylate und insbesondere Copolymere der Acrylsäure mit Maleinsäure, vorzugsweise solche aus 50 bis 10 Gew.-% Maleinsäure. Die relative Molekülmasse der Homopolymeren liegt im allgemeinen zwischen 1000 und 100000, die der Copolymeren zwischen 2000 und 200000, vorzugsweise zwischen 50000 bis 120000, bezogen auf die freie Säure. Insbesondere sind auch wasserlösliche Polyacrylate geeignet, die beispielsweise mit etwa 1% eines Polyallylethers der Sucrose quervernetzt sind und die eine relative Molekülmasse oberhalb 1000000 besitzen Beispiele hierfür sind unter dem Namen Carbopol® 940 und 941 erhältliche Polymere. Die quervemetzten Polyacrylate werden vorzugsweise in Mengen nicht über 1 Gew.-% besonders bevorzugt in Mengen von 0,2 bis 0,7 Gew.-% eingesetzt.

In einer weiteren Ausführungsform sind Spül- und Reinigungsmittel, insbesondere Mittel für automatische Geschirrspülmaschinen bevorzugt, die 0,1 bis 15, vorzugsweise 0,5 bis 12 Gew.% Tenside enthalten, die Hydroxymischether der Formel (I) enthalten, 5 bis 90, vorzugsweise 10 bis 80 Gew.% Builder, 0,1 bis 6 Gew.% Reinigungsmittelenzym, optional 0,1 bis 40, vorzugsweise 0,5 bis 30 Gew.% Bleichmittel und Zusatzmaterialien enthalten. Gew. % ist bezogen auf das Mittel zu verstehen.

Gegenstand der Erfindung ist die Verwendung der Hydroxymischether der Formel (I) zum Spülen und Reinigen von harten Oberflächen in maschinellen Geschirr-Reinigern und/oder Klarspülern, die dann eine besonders hohe Kunststoffverträglichkeit aufweisen und ein sehr gutes Ablaufverhalten zeigen.

Bevorzugt weiterhin ist die Verwendung von Hydroxymischethern in Kombination mit Alkyl- und/oder Alkenyloligoglykoside in den bisher aufgeführten Reinigungsbereichen.

Ganz besonders bevorzugt sind die Hydroxymischether der Formel (I), gegebenenfalls in Kombination mit den bereits beschriebenen weiteren Tensiden, zur Herstellung von festen Reinigerformulierungen.

### Beispiele

### Screening - Methode zur Bewertung der Benetzungseigenschaften von Tensid - Lösungen gegenüber Kunststoffmaterialien

Die Benetzungseigenschaften von Tensidlösungen gegenüber Kunststoffen wurden in einem vereinfachten Screening in Anlehnung an die Bedingungen / Testparameter in einer handelsüblichen Geschirrspülmaschine, jedoch ohne die Verwendung einer solchen, bestimmt.

Zur Bewertung der Benetzungseigenschaften werden Kunststoff - Prüfkörper der Abmessung 20 x 5 cm zuerst mit 1%iger NaOH und dann mit iso - Propanol gereinigt. Die so vorbehandelten Prüfkörper werden dann in die zu prüfenden Lösung getaucht und direkt wieder entfernt. Die Bewertung erfolgt visuell durch Aufstellung einer Rangliste bzw. nach einer Notenscala von 1 - 5. Dabei bedeutet 5, daß spontanes Aufreißen des Flüssigkeitsfilms auftritt und die Benetzung vollständig aufgehoben wird. Note 5 wird bei Verwendung von Wasser erhalten. Die Note 1 bedeutet vollständige Benetzung der Kunststoffoberfläche bei einem gleichmäßigem Ablauf des Flüssigkeitsfilms. Note 1 wird bei Verwendung von Na-LAS (z.B. Maranil A 55 /COGNIS) erhalten.

### Testparameter:

| | |
|---|---|
| Wasserhärte | 2°d |
| Salzfracht | 700 ppm |
| Temperatur | 60°C |
| Tensidkonzentration | 0,1% |

### Prüfkörper:

### PP (Polypropylen); PE (Polyethylen); PC (Polycarbonat);

In Tabelle 1 sind die Versuchsergebnisse dargestellt, wobei V1 bis V5 Vergleichsversuche und 1 das erfindungsgemäße Beispiel wiedergeben.

**Tabelle 1:**

| **Benetzungseigenschaften an Kunststoffen** | | | | | | |
|---|---|---|---|---|---|---|
| **Zusammensetzung in % Aktivsubstanz** | **V1** | **V2** | **V3** | **V4** | **V5** | **1** |
| Fettalkohol C8-C10 +(3 PO/ 40 EO) - 2-hydroxydodecylether (randomized) | | | | | | 0,1 |
| Fettalkohol C8-C10 + 60EO - 2-hydroxydodecylether | - | - | - | - | 0,1 | |
| Fettalkohol C8-C10 + 10EO - 2-hydroxydodecylether | - | - | - | 0,1 | - | |
| Poly Tergent SLF-18B-45* | - | - | 0,1 | - | - | |
| Maranil A 55 (Na - LAS) | - | 0,1 | - | - | - | |
| Wasser, 2°d / 700ppm NaCl | 100 | 99,9 | 99,9 | 99,9 | 99,9 | 99,9 |
| Benetzungseigenschaften an Kunststoffen | | | | | | |
| Temperatur: 60°C / Kunststoff "PP" | 5 | 1 | 3 | 4 | 3 | 2 |
| Temperatur: 60°C / Kunststoff "PE" | 5 | 1 | 3 | 4 | 3 | 2 |
| Temperatur: 60°C / Kunststoff "PC" | 5 | 1 | 4 | 3 | 3 | 3 |

| | | | | | | |
|---|---|---|---|---|---|---|
| *: Alkoholalkoxylat der Firma Olin Chemicals mit 1 PO und 22 EO, | | | | | | |

Beim Spannungsriß-Korrosionstest werden die Kunststoffstäbchen kurz dem zu prüfendem Produkt durch Eintauchen oder Sprühen ausgesetzt. Das anhaftende Produkt wird nicht entfernt. Nach 24 Stunden wird erneut eingesprüht oder getaucht. Insgesamt werden die Kunststoffe 5 mal dem Prüfmedium ausgesetzt. Die abschließende Beurteilung erfolgt visuell nach 14 Tagen. Dabei bedeuten:
"1" - unverändert
"2" - Rißansatz / kleiner Riß
"3" - Riß durchgehend
"4" - Bruch

Das erfindungsgemäße Beispiele ist in Tabelle 2 unter 1 dargestellt, V1 bis V 4 stellen Vergleichsversuche dar.

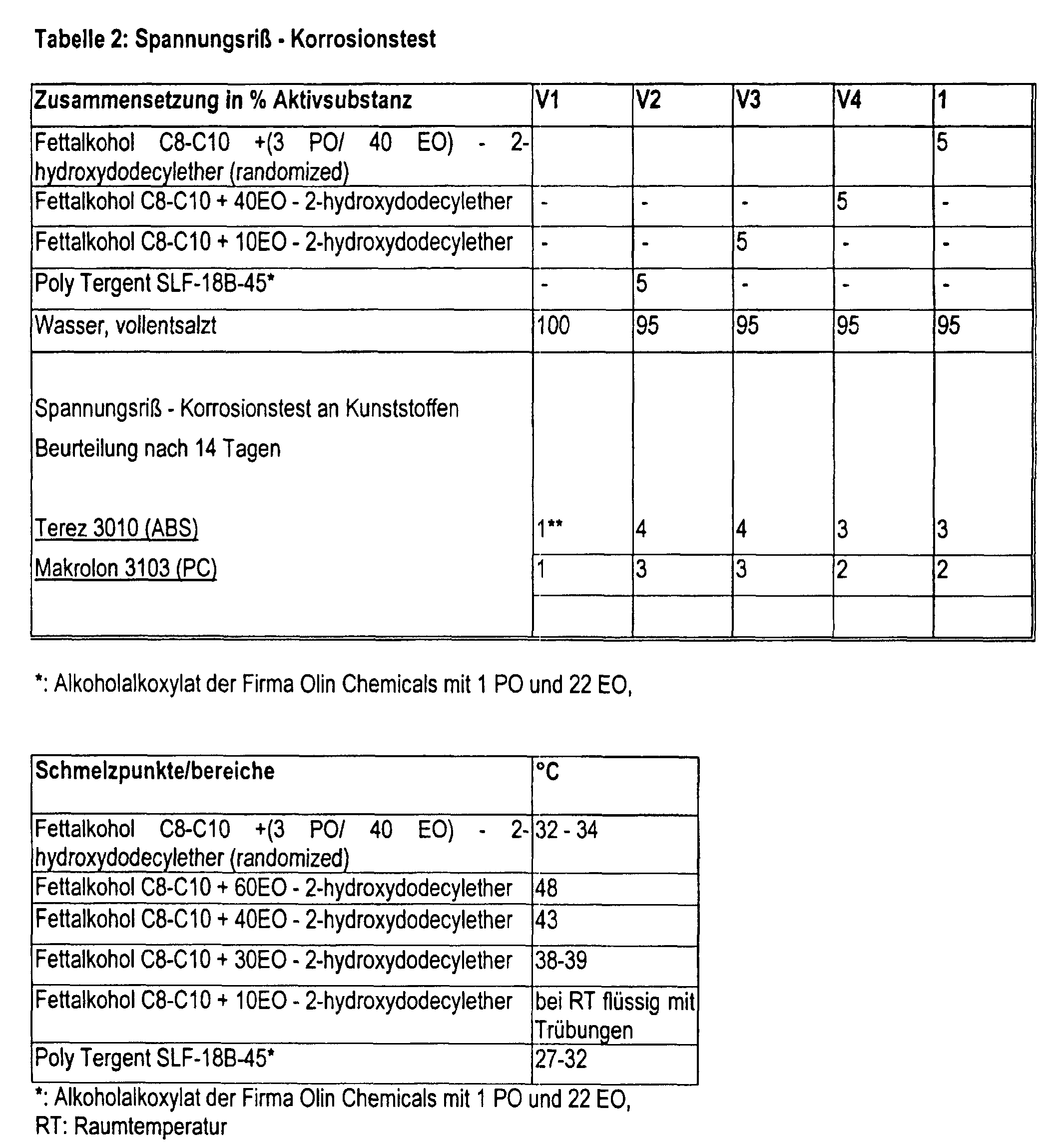

## Patentansprüche

1. Verwendung von
Hydroxymischethem (HME) der Formel (I)
R¹O[CH₂CHR⁴O]ₓ[CH₂CHR³O]_{y}CH₂CH(OH)R² (I)
in der R¹ für Alkyl- und/oder Alkenylrest mit 4 bis 22 Kohlenstoffatomen
R² für einen Alkyl- und/oder Alkenylrest mit 2 bis 22 Kohlenstoffatomen
R⁴ für ein Wasserstoffatom und R³ für einen Methylrest, oder
R³ für ein Wasserstoffatom und R⁴ für einen Methylrest,
x für 1 bis 40 und y für 1 bis 40 steht,
wobei die Alkyleneinheiten [CH₂CHR⁴O] und [CH₂CHR³O] im Verhältnis 40 :1 bis 40 : 5 randomisiert, d.h. in Form einer statistischen, zufälligen Verteilung vorliegen,
in maschinellen Geschirrreiniger oder Klarspülem zum Spülen und Reinigen von harten Oberflächen.

2. Verwendung nach Anspruch 1, **dadurch gekennzeichnet, dass** neben den Hydroxymischethern der Formel (I) Alkyl- und/oder Alkenyloligoglykoside mitverwendet werden.

3. Verwendung nach einem der Ansprüche 1 bis 2, **dadurch gekennzeichnet, dass** neben den Hydroxymischethem der Formel (I) weitere nichtionische Tenside mitverwendet werden, vorzugsweise ausgewählt aus der Gruppe, die gebildet wird von Alkoxylaten von Alkanolen, endgruppenverschlossenen Alkoxylaten von Alkanolen ohne freie OH-Gruppen, alkoxylierten Fettsäureniedrigalkylestem und Aminoxiden.

4. Verwendung nach einem der Ansprüche 1 bis 3, **dadurch gekennzeichnet, dass** als weitere Komponente anionische Tenside mitverwendet werden, vorzugsweise ausgewählt aus der Gruppe, die gebildet wird von Alkyl- und/oder Alkenylsulfaten, Alkylethersulfate, Alkylbenzolsulfonate, Monoglycerid(ether)sulfate und Alkansulfonate.

5. Verwendung nach einem der Ansprüche 1 bis 4, **dadurch gekennzeichnet, dass** die Hydroxymischether in Mitteln verwendet werden, die, bezogen auf das Mittel an Aktivsubstanz 0,01 bis 25 Gew.-% der Verbindungen der Formel (I) enthalten.

6. Verwendung nach einem der Ansprüche 1 bis 5, **dadurch gekennzeichnet, dass** die Hydroxymischether der Formel (I) in Spül- und Reinigungsmittel eingesetzt werden, die enthalten
a. 0,1 bis 15 Gew.% -bezogen auf die Mittel- Tenside, die Hydroxymischether der Formel (I)
b. 5 bis 90 Gew. % -bezogen auf die Mittel - Builder
c. 0,1 bis 6 Gew.% -bezogen auf die Mittel- Reinigungsmittelenzym
d. optional 0,1 bis 40 Gew.% - bezogen auf die Mittel- Bleichmittel und
e. Zusatzmaterialien.

## Claims

1. The use of hydroxy mixed ethers (HMEs) corresponding to formula (I):
**R**^{**1**}**O[CH**_{**2**}**CHR**^{**4**}**O]**_{**x**}**(CH**_{**2**}**CHR**^{**3**}**O]**_{**y**}**CH**_{**2**}**CH(OH)R**^{**2**} **(I)**
in which
R¹ is an alkyl and/or alkenyl group containing 4 to 22 carbon atoms,
R² is an alkyl and/or alkenyl group containing 2 to 22 carbon atoms,
R⁴ is a hydrogen atom and R³ is a methyl group or
R³ is a hydrogen atom and R⁴ is a methyl group,
x = 1 to 40 and y = 1 to 40,
the alkylene units [CH₂CHR⁴O] and [CH₂CHR³O] being present in a ratio of 40:1 to 40:5 in randomized form, i.e. in the form of a statistical random distribution,
in dishwasher detergents or rinse agents for washing and cleaning hard surfaces.

2. The use claimed in claim 1, **characterized in that** alkyl and/or alkenyl oligoglycosides are used in addition to the hydroxy mixed ethers of formula (I).

3. The use claimed in claim 1 or 2, **characterized in that** other nonionic surfactants preferably selected from the group consisting of alkoxylates of alkanols, end-capped alkoxylates of alkanols with no free OH groups, alkoxylated fatty acid lower alkyl esters and amine oxides are used in addition to the hydroxy mixed ethers of formula (I).

4. The use claimed in any of claims 1 to 3, **characterized in that** anionic surfactants preferably selected from the group consisting of alkyl and/or alkenyl sulfates, alkylether sulfates, alkyl benzenesulfonates, monoglyceride (ether) sulfates and alkane sulfonates are used as an additional component.

5. The use claimed in any of claims 1 to 4, **characterized in that** the hydroxy mixed ethers are used in compositions which contain 0.01 to 25% by weight of the compounds of formula (I), based on the composition.

6. The use claimed in any of claims 1 to 5, **characterized in that** the hydroxy mixed ethers corresponding to formula (I) are used in dishwasher detergent/rinse agent compositions which contain
a. 0.1 to 15% by weight, based on the composition, of the hydroxy mixed ethers corresponding to formula (I),
b. 5 to 90% by weight, based on the composition, of builders,
c. 0.1 to 6% by weight, based on the composition, of detergent enzyme,
d. optionally 0.1 to 40% by weight, based on the composition, of bleaching agents and
e. additives.

## Revendications

1. °) Utilisation d'hydroxyéthers mixtes (HME) de formule (I)
R¹O[CH₂CHR⁴O]ₓ[CH₂CHR³O]_{y}CH₂CH(OH)R² (I)
dans laquelle R¹ représente un reste alkyle et/ou un reste alcényle comprenant de 4 à 22 atomes de carbone,
R² représente un reste alkyle et/ou un reste alcényle comprenant de 2 à 22 atomes de carbone,
R⁴ représente un atome d'hydrogène et R³ un reste méthyle, ou
R³ représente un atome d'hydrogène et R⁴ représente un reste méthyle,
x vaut de 1 à 40 et y vaut de 1 à 40,
les unités d'alcylène [CH₂CHR⁴O] et [CH₂CHR³O] étant randomisées dans un rapport de 40/1 à 40/5, c'est-à-dire qu'elles sont présentes sous la forme d'une répartition statistique, aléatoire dans des produits de nettoyage de la vaisselle en machine ou des agents mouillants pour le rinçage et le nettoyage de surfaces dures.

2. Utilisation selon la revendication 1,
**caractérisée en ce que**
en plus des hydroxyéthers mixtes de formule (I), on utilise des oligoglycosides d'alkyle et/ou d'alcényle.

3. Utilisation selon l'une quelconque des revendications 1 à 2,
**caractérisée en ce qu'**
en plus des hydroxyéthers mixtes de formule (I), on utilise d'autres tensioactifs non ioniques, de préférence choisis dans le groupe formé par des alcoxylates d'alcanols, des alcoxylates d'alcanols à groupes terminaux bloqués ne comportant pas de groupes OH libres, des alkylesters inférieurs d'acides gras alcoxylés ou des oxydes d'amines.

4. Utilisation selon l'une quelconque des revendications 1 à 3,
**caractérisée en ce que**
comme autres composants, on utilise des tensioactifs anioniques, de préférence choisis dans le groupe formé de sulfates d'alcényle et/ou d'alkyle, d'éthersulfates d'alkyle, de sulfonates d'alkylbenzène, d'(éther) sulfates de monoglycérides et de sulfonates d'alcanes.

5. Utilisation selon l'une quelconque des revendications 1 à 4,
**caractérisée en ce que**
l'hydroxyéther mixte est utilisé dans des produits qui contiennent 0,01 à 25 % en poids de composés de formule (I) par rapport aux substances actives dans le produit.

6. Utilisation selon l'une quelconque des revendications 1 à 5,
**caractérisée en ce que**
les hydroxyéthers mixtes de formule (I) sont introduits dans des produits de rinçage et de lavage, qui contiennent :
a. de 0,1 à 15 % en poids d'hydroxyéthers mixtes tensioactifs de formule (I), par rapport au produit ;
b. de 5 à 90 % en poids d'adjuvants, par rapport au produit ;
c. de 0,1 à 6 % en poids d'enzymes d'agents de nettoyage par rapport au produit ;
d. facultativement de 0,1 à 40 % en poids d'agents de blanchiment par rapport au produit ; et
e. des substances additives.
